# EUROPEAN PATENT APPLICATION

(11) **EP 4 269 923 A1**
(43) Date of publication of application: **01.11.2023**
(21) Application number: 22752600.1
(22) Date of filing: 27.01.2022
(51) Int. Cl.: F27B 3/26, F27B 3/28, F27D 21/02

(54) **VIDEO-DEVICE-EQUIPPED ELECTRIC FURNACE**

(30) Priority: 10.02.2021 JP 2021019715
(71) Applicant: JFE Steel Corporation, Tokyo 100-0011 (JP)
(72) Inventor: TSUTSUMI Koichi, Tokyo 100-0011 (JP); MIWA Yoshihiro, Tokyo 100-0011 (JP); OKUYAMA Goro, Tokyo 100-0011 (JP); ENDO Katsutoshi, Tokyo 100-0011 (JP); KAWANAMI Shunichi, Tokyo 100-0011 (JP)
(74) Representative: Grünecker Patent- und Rechtsanwälte PartG mbB
(86) International application number: PCT/JP2022/003175
(87) International publication number: WO 2022/172771

(57) **Abstract**

To directly and clearly observe the state inside a melting chamber in an electric furnace, a video-device-equipped electric furnace comprises: a melting chamber; a preheating chamber; and a video device to observe an inside of the melting chamber. The video device includes: a relay lens; an inner tube containing the relay lens and having an outer diameter of 100 mm or less; an outer tube containing the inner tube; and an imaging device located at an axial end of the relay lens on a furnace outside. The video device is provided through a hole in a furnace wall or lid so that the relay lens is located 300 mm to 3500 mm away from a highest molten iron interface in a vertically upward direction and the imaging device is located 300 mm or more away from an inner wall of the furnace wall or lid in a furnace outward direction.

## Description

### TECHNICAL FIELD

The present disclosure relates to a video-device-equipped electric furnace, and particularly relates to a video-device-equipped electric furnace capable of producing molten iron while directly observing the state inside a melting chamber in which a cold iron source is melted to obtain molten iron.

### BACKGROUND

In an electric furnace, molten iron is usually produced by supplying a cold iron source such as scrap to a melting chamber and melting the cold iron source by arc heat generated by DC or AC electricity. Examples of typical cold iron source supply methods include a method whereby the furnace lid of the melting chamber is opened and the cold iron source is non-continuously supplied from above the melting chamber, and a method whereby a preheating chamber connected to the melting chamber is provided and the cold iron source is continuously supplied from the preheating chamber to the melting chamber. Of these, the method of supplying the cold iron source from the preheating chamber to the melting chamber is widely used because the cold iron source can be melted more efficiently.

It has been conventionally impossible to, when producing molten iron in an electric furnace, directly observe the state inside the melting chamber in which the temperature becomes extremely high due to arc heat. Hence, engineers control the melting conditions based on empirical rules without visually checking the state of the cold iron source and molten iron in the melting chamber. This poses a problem in efficient production of molten iron.

Methods for visually checking the inside of the furnace are described, for example, in JP H08-232014 A (PTL 1), JP S50-108816 A (PTL 2), and JP H07-103670 A (PTL 3).

PTL 1 proposes a technique of monitoring bumping of molten steel and slag using a television camera installed obliquely above a ladle mouth in a vacuum refining furnace. The actual technique in PTL 1 installs the television camera inside the upper lid of the vacuum refining furnace and monitors the side wall of a refractory near the ladle mouth to reduce the influence of gas and dust as compared with the case of looking directly at the molten steel surface.

PTL 2 proposes an imaging device capable of observing the state inside a blast furnace with a color television camera. The actual technique in PTL 2 installs the imaging device in front of a tuyere outside the blast furnace to capture an image of the state inside the furnace through the tuyere peephole. The imaging device in PTL 2 captures the image by causing light to pass through a pinhole instead of an objective lens while finely adjusting an optical axis angle adjusting mechanism and an optical axis moving mechanism.

PTL 3 proposes an in-furnace monitoring device for capturing an image of the inside of a furnace such as a smelting furnace with a television camera and monitoring the internal state with the television image.

### CITATION LIST

### Patent Literature

PTL 1: JP H08-232014 A
PTL 2: JP S50-108816 A
PTL 3: JP H07-103670 A

### SUMMARY

### (Technical Problem)

However, with the technique in PTL 1, the observation object is inside the vacuum refining furnace, and the side wall near the ladle mouth, which is distant from the molten steel that is actually being melt and slag, is observed. Therefore, observation cannot be made unless bumping of molten iron or slag occurs, and it is impossible to directly observe molten steel, which is a high-temperature radiation object, constantly during operation. With the technique in PTL 1, the occurrence of bumping in the vacuum refining furnace can be recognized, but the state in the melting chamber during actual melting cannot be recognized.

With the technique in PTL 2, the observation object is the inside of the blast furnace, and the image of the inside of the furnace is captured from the tuyere peephole which is outside the furnace. There is thus a limit to how clearly the state inside the melting chamber during melting can be recognized. Moreover, the imaging device in PTL 2 has the complex optical axis angle adjusting mechanism and optical axis moving mechanism, causing an increase in device size.

PTL 3 only describes the structure of the in-furnace monitoring device that can be inserted into the furnace, and provides no information on specific and optimal conditions regarding how the device is actually installed in what kind of furnace to observe the inside of the furnace.

Thus, with the conventional techniques, it is impossible to visually check clearly the inside of a melting chamber in an electric furnace during operation.

It could therefore be helpful to provide a video-device-equipped electric furnace that is an electric furnace configured to melt a cold iron source by arc heat to produce molten iron in a melting chamber and enables direct and clear observation of the state inside the melting chamber during operation.

### (Solution to Problem)

Upon repeated examination on an electric furnace in which a cold iron source preheated in a preheating chamber is supplied to a melting chamber and the cold iron source is melted by arc heat in the melting chamber to produce molten iron, we discovered that the cold iron source being melted in the melting chamber and the molten iron can be directly and clearly observed by providing a video device having a predetermined structure at a predetermined position of the melting chamber.

We thus provide:
1. A video-device-equipped electric furnace comprising: a melting chamber configured to melt a cold iron source by arc heat to obtain molten iron; a preheating chamber configured to preheat the cold iron source to be supplied to the melting chamber; and a video device configured to observe an inside of the melting chamber, wherein the video device includes: a relay lens made up of a plurality of lenses; an inner tube containing the relay lens and having an outer diameter of 100 mm or less; an outer tube containing the inner tube; and an imaging device located at an axial end of the relay lens on a furnace outside, and the video device is provided through a hole in a furnace wall or a furnace lid defining the melting chamber so that the relay lens is located 300 mm or more and 3500 mm or less away from a highest molten iron interface in a vertically upward direction and the imaging device is located 300 mm or more away from an inner wall of the furnace wall or the furnace lid in a furnace outward direction.

In the present disclosure, the "highest molten iron interface" refers to an interface at a position where the interface of molten iron in the melting chamber is highest in terms of design. The position of the highest molten iron interface can be calculated from the shape of the melting chamber in the electric furnace and the design volume of molten iron obtained in the melting chamber.

2. The video-device-equipped electric furnace according to 1., comprising a gas supply device configured to supply a gas between the inner tube and the outer tube at a flow rate of 50 NL/min or more and 250 NL/min or less.

### (Advantageous Effect)

It is thus possible to, in an electric furnace that produces molten iron from a cold iron source using arc heat in a melting chamber, directly and clearly observe the cold iron source and the molten iron in the melting chamber during melting.

If the inside of the melting chamber in the electric furnace during operation can be observed well, for example, the supply state of the cold iron source to the melting chamber and the melting state of the cold iron source in the melting chamber can be recognized promptly and accurately, with it being possible to effectively optimize the operating conditions, prevent operational troubles, and reduce the production costs. The present disclosure thus has significant effects industrially.

### BRIEF DESCRIPTION OF THE DRAWINGS

In the accompanying drawings:
FIG. 1 is a longitudinal sectional view of a video-device-equipped electric furnace according to an embodiment of the present disclosure; and
FIG. 2 is a diagram illustrating an example of the structure of a video device used in the present disclosure.

### DETAILED DESCRIPTION

An embodiment of the present disclosure will be described in detail below.

The embodiment described below shows a preferred example of the present disclosure, and the present disclosure is not limited to such example.

### (Video-device-equipped electric furnace)

A video-device-equipped electric furnace according to the present disclosure has a feature that a video device having a predetermined structure is provided at a predetermined position in the electric furnace. The provision of the predetermined video device at the predetermined position makes it possible to, when producing molten iron from a cold iron source in the electric furnace, directly and clearly observe the cold iron source being melted or the molten iron.

A preferred embodiment of the video-device-equipped electric furnace according to the present disclosure will be described in detail below with reference to the drawings.

### [Electric furnace]

An electric furnace 1 includes: a melting chamber 2 configured to melt a cold iron source 15 by heat from an arc 18 to obtain molten iron 16; a preheating chamber 3 configured to preheat the cold iron source 15 to be supplied to the melting chamber 2; and a video device 30 installed at a predetermined position of the melting chamber 2.

The cold iron source 15 as raw material is charged into a supply bucket 14 and transported to above a desired cold iron source supply port 19 by a traveling carriage 23. The cold iron source supply port 19 is then opened to supply the cold iron source 15 to the preheating chamber 3 from above.

The cold iron source 15 supplied to the preheating chamber 3 is preheated by any method. For example, hot exhaust gas previously generated in the melting chamber 2 may be passed into the preheating chamber 3 to preheat the cold iron source 15, with it being possible to enhance the production efficiency. Exhaust gas may be sucked through a duct 20 and passed into the preheating chamber 3, and excess exhaust gas may be exhausted through the duct 20.

The preheated cold iron source 15 is supplied to the melting chamber 2. The cold iron source 15 may be supplied to the melting chamber 2 by using the self-weight of the cold iron source 15, or continuously supplied to the melting chamber 2 by an extruder (not illustrated) provided in the preheating chamber 3, for example.

The melting chamber 2 is defined by a furnace wall 4 and a furnace lid 5. The melting chamber 2 may include an electrode 6 for generating the arc 18 for heating, an oxygen blowing lance 7 and a carbon material blowing lance 8 for maintaining a desired high-temperature state, and a burner 9 for locally heating low-temperature parts. The cold iron source 15 supplied to the melting chamber 2 is melted by arc heat into molten iron 16 and molten slag 17. The obtained molten iron 16 can be tapped from a tapping hole 12 by opening a tapping door 21. The molten slag 17 can be discharged from a slag hole 13 by opening a slag discharge door 22.

In the present disclosure, the video device 30 capable of observing the inside of the melting chamber 2 is installed at an optimum position in the electric furnace, so that the state of supplying the cold iron source 15 and the state of melting the cold iron source 15 into the molten iron 16 can be recognized well, as described later. This makes it possible to effectively prevent operational troubles and enhance the production efficiency in the molten iron production process.

Typical examples of the cold iron source 15 include in-house scrap generated at steelworks, consumer scrap, and pig iron made by hardening hot metal, without being limited thereto. Examples of in-house scrap generated at steelworks include unsteady parts (parts at the start of casting and parts generated at the end of casting) of cast steel generated by continuous casting or ingot casting, and crops generated in rolling of steel materials such as steel strips. Examples of consumer scrap include recycled materials such as construction steel materials (H-beam, etc.), automobile steel materials, and cans. Examples of pig iron made by hardening hot metal include pig iron generated by tapping and hardening hot metal obtained from iron ore, coke, etc. as raw materials in a smelting furnace such as a blast furnace.

### [Video device]

The video device 30 includes a relay lens 31 made up of a plurality of lenses, an inner tube 33 containing the relay lens 31 and having an outer diameter of 100 mm or less, an outer tube 32 containing the inner tube 33, and an imaging device 36 located at the axial end of the relay lens 31 on the furnace outside. The imaging device 36 is typically a camera, and is preferably protected by a housing 35.

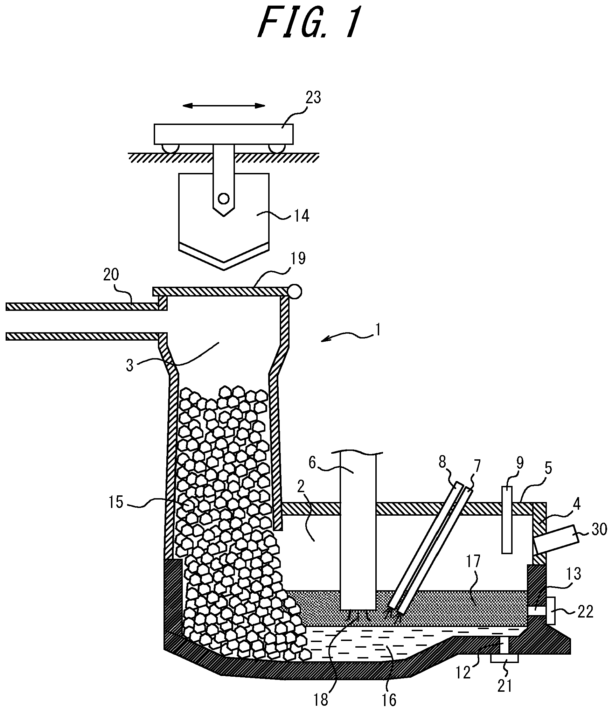

As illustrated in FIG. 1, the video device 30 is installed facing the melting chamber 2 side through a hole made in the furnace wall 4 or the furnace lid 5 and more preferably further through a jig 34 for fixing the video device 30 at the predetermined position so that the relay lens 31 and the imaging device 36 will be arranged in this order from the melting chamber 2 side toward the furnace outside. Since the video device 30 has the imaging device 36 via the relay lens 31 in this way, the imaging device 36 can be located at a predetermined distance away from the electric furnace 1 using the length of the relay lens 31 and thus can be protected from the heat of the electric furnace 1.

The relay lens 31 is protected by a predetermined double tube structure of the inner tube 33 and the outer tube 32. Since the video device 30 has the predetermined inner tube 33 and outer tube 32 in this way, the relay lens 31 can be protected from the heat of the electric furnace 1. In particular, it is important to limit the outer diameter of the inner tube 33 to 100 mm or less. Molten iron or molten slag may scatter from the melting chamber 2 to the tip lens closest to the melting chamber 2 from among the lenses of the relay lens 31. Increasing the outer diameter of the inner tube 33 widens the field of view but also increases such a risk of molten iron or molten slag scattering to the tip lens. Narrowing the inner tube 33 can reduce the risk of scattering of molten iron or molten slag from the melting chamber 2 and secure a clear image field of view. Gas such as air may be blown to the melting chamber 2 side in order to repel the scattering molten iron or molten slag. By narrowing the inner tube 33, it is possible to increase the flow rate of the gas and effectively prevent the adhesion of scattered matter to the lens. The outer diameter of the inner tube 33 is preferably 90 mm or less. The outer diameter of the inner tube 33 is typically 20 mm or more.

The inner diameter of the inner tube 33, the inner diameter of the outer tube 32, and the outer diameter of the outer tube 32 are not limited as long as the outer diameter of the inner tube 33 is within the foregoing range, but may be determined, for example, as follows:
The inner diameter of the inner tube 33 is determined based on the determined outer diameter of the inner tube 33 and in consideration of the thickness of the inner tube 33 in view of the required strength and the size of the lens used. The inner diameter of the inner tube 33 is typically 16 mm or more, and preferably 20 mm or more. The inner diameter of the inner tube 33 is preferably 90 mm or less, and more preferably 86 mm or less.

The inner diameter of the outer tube 32 is determined based on the determined outer diameter of the inner tube 33 and in consideration of the gap between the inner tube 33 and the outer tube 32 in view of the desired flow velocity and flow rate of cooling gas. The inner diameter of the outer tube 32 is preferably 30 mm or more. The inner diameter of the outer tube 32 is preferably 110 mm or less, and more preferably 100 mm or less.

The outer diameter of the outer tube 32 is determined based on the determined inner diameter of the outer tube 32 and in consideration of the thickness of the outer tube 32 in view of the required strength. The outer diameter of the outer tube 32 is preferably 40 mm or more. The outer diameter of the outer tube 32 is preferably 120 mm or less, and more preferably 110 mm or less.

It is preferable to provide a gap between the inner tube 33 and the outer tube 32 and supply a gas 39 such as air into the gap at a flow rate of 50 NL/min or more and 250 NL/min or less. The electric furnace 1 may further include a gas supply device (not illustrated) from which the gas 39 can be supplied. The tip portions of the outer tube 32 and the inner tube 33 are heated significantly by radiant heat mainly from molten iron, etc. as the observation object, and, due to heat conduction, the relay lens 31 contained in the inner tube 33 may exceed its heat resisting temperature. This can cause problems such as the lens being damaged, e.g. distorted, which prevents the image from reaching the imaging device 36, or the lens being cracked. The heat resisting temperature of the video device 30 is typically 60 °C. It is important to perform control so that this heat resisting temperature will not be exceeded. If the temperature of the video device 30 exceeds 60 °C, for example, the lens is distorted and the image cannot be secured. While there is no other method of cooling the relay lens 31 than cooling by the gas 39, by supplying the gas 39 at a flow rate not less than the foregoing lower limit, it is possible to cool the relay lens 31 well to thus reduce the influence of the high temperature of the melting chamber during operation and secure a clearer image field of view.

The tip lens closest to the observation object from among the lenses of the relay lens 31 is highly likely to be exposed to high-temperature radiation, have slag scattering thereto during the operation of the electric furnace, or have slag or molten iron approaching thereto when the electric furnace is tilted during tapping. In order to effectively blow off such scattering molten iron and slag and prevent them from adhering to the lens, it is preferable to appropriately control the flow rate of the gas 39. The flow rate is more preferably 100 NL/min or more.

If the flow rate of the gas 39 is more than 250 NL/min, the adhesion of molten steel and slag can be prevented, but the running cost increases. A large amount of the gas 39 may, however, be used. Since a high flow rate may cause dew condensation due to excessive cooling, the flow rate is preferably not more than the foregoing upper limit and more preferably 200 NL/min or less from the viewpoint of reducing the production costs and suppressing dew condensation.

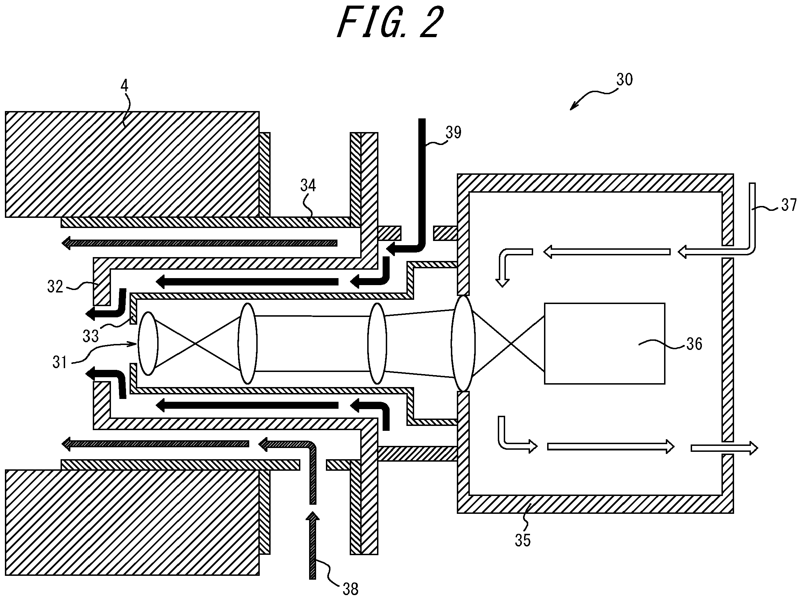

Herein, "NL/min" is a unit commonly used in the field to which the present disclosure is relevant, and refers to the flow rate at an atmospheric pressure of 1 atm. The unit "NL/min" can be normally interpreted as "L/min". Typically, the gas flows from the outside of the electric furnace toward the inside of the electric furnace (see FIG. 2).

Likewise, it is preferable to supply a gas 38 such as air between the outer tube 32 and the jig 34 which can be used when attaching the video device 30 to the electric furnace. The electric furnace 1 may further include a gas supply device from which the gas 38 can be supplied. Given that the outer tube 32 is subjected to heat transferred from the furnace wall 4 or the furnace lid 5 via the jig 34, supplying the gas 38 can further cool the video device 30 to thus further reduce the influence of the high temperature of the melting chamber during operation and secure a clearer image field of view. Moreover, molten slag and the like that may adhere to the front surface of the lens can be blown off more effectively. From the foregoing viewpoint, the flow rate of the gas 38 is preferably 400 NL/min or more and preferably 600 NL/min or less, and more preferably about 500 NL/min, although depending on the outer diameter of the outer tube 32 and the design size of the gap between the jig 34 and the outer tube 32. Given that the furnace wall 4 and the furnace lid 5 are usually water-cooled, the flow rate of the gas 38 may be lower than that of the gas 39.

Likewise, it is preferable to supply a gas 37 such as air into the housing 35. The electric furnace 1 may further include a gas supply device from which the gas 37 can be supplied. Supplying the gas 37 can further cool the imaging device 36 to thus further reduce the influence of the high temperature of the melting chamber during operation and secure a clearer image field of view. From the foregoing viewpoint, the flow rate of the gas 37 is preferably 200 NL/min or more and preferably 300 NL/min or less, and more preferably about 260 NL/min, although depending on the design size of the housing 35.

Since the gas for cooling is used in large quantities, the gas pipes supplied as the infrastructure of the steelworks may be branched/extended and connected for use, or the gas may be directly supplied from a compressor to the electric furnace in which the gas is used. The gas is typically air, but an inert gas such as nitrogen may be used if there is no cost problem. The gas desirably contains as little moisture as possible. If the gas contains moisture, the moisture may adhere to the lens surface and cause narrowing of the field of view. The gas supply device provided in the electric furnace 1 is not limited, and examples include the above-mentioned gas pipes and compressor.

### [Position of video device]

The installation position of the video device 30 is very important in the present disclosure. Unless the video device 30 is installed at the predetermined position in the electric furnace 1, the inside of the high-temperature melting chamber 2 during operation cannot be observed directly and clearly.

Specifically, in the melting chamber 2, the installation position of the relay lens 31 in the video device 30 needs to be 300 mm or more and 3500 mm or less away from the highest molten iron interface in the vertically upward direction. Herein, the installation position of the relay lens 31 is based on the center of the tip lens closest to the melting chamber 2. The highest molten iron interface is as defined above. Engineers in the relevant field can calculate the highest molten iron interface from the shape of the melting chamber 2 which have been determined at the time of installation of the electric furnace 1 and the volume of the molten iron 16 produced in the melting chamber 2. If the height of the relay lens 31 is less than 300 mm from the highest molten iron interface, for example, when the interface of the molten iron varies or when the electric furnace is tilted to remove the slag or tap the molten iron, the lens is covered with the slag and/or the molten iron. In addition, the heat load on the relay lens 31 due to the radiation from the molten iron increases, making it impossible to secure a good image field of view. If the height of the relay lens 31 is more than 3500 mm from the highest molten iron interface, the heat load due to the radiation from the molten iron decreases, but, for example, the field of view for observing the movement of the cold iron source 15 extruded from the preheating chamber 3 narrows, making it impossible to accurately recognize the state of the entire melting chamber 2. For the installation position of the video device 30, the relay lens 31 is preferably 400 mm or more away from the highest molten iron interface and preferably 1500 mm or less away from the highest molten iron interface in the vertically upward direction.

As long as this predetermined installation position is satisfied, the video device 30 may be installed at the furnace lid 5. However, since the furnace lid is opened and closed, more attention is required for protecting and routing the cable for carrying images. The video device 30 is therefore preferably installed at the furnace wall 4.

Moreover, the video device 30 needs to be installed so that the imaging device 36 will be located 300 mm or more away from the inner wall of the furnace wall 4 or the furnace lid 5 of the melting chamber in the furnace outward direction (i.e. direction to the outside of the furnace). As a result of the imaging device 36 being 300 mm or more away from the inner wall of the furnace wall 4 or the furnace lid 5 in the furnace outward direction, the heat load on the imaging device 36 can be sufficiently reduced and a clear image field of view can be secured. In addition, repair or replacement is easy in the event of a failure of the imaging device 36, and also the flow rate of the gas 37 for cooling the imaging device 36 can be reduced to reduce the production costs. Herein, the separation distance of the imaging device 36 from the inner wall of the furnace wall 4 or the furnace lid 5 is the shortest distance L on the central axis O of the relay lens 31 from the intersection P of the central axis O and the line segment R to the imaging device 36 or a distance similar thereto, where the line segment R connects the inner wall-side opening edges of the hole in the furnace wall 4 or the furnace lid 5 at the maximum diameter, as illustrated in FIG. 2. In FIG. 2, the relay lens 31 protected by the outer tube 32 and the inner tube 33 is inserted in the hole in the furnace wall 4.

The installation position can be controlled, for example, by adjusting the length of the relay lens 31 included in the video device 30 or the length of the inner tube 33 in which the relay lens 31 is contained.

The installation angle of the video device 30 is not limited, and may be determined appropriately depending on the position of the observation object and the installation height in the furnace wall 4 or the furnace lid 5. For example, in the case of installing the video device 30 at the furnace wall 4 to observe the molten slag 17 and the molten iron 16, the video device 30 is installed at a downward angle with respect to the horizontal direction as illustrated in FIG 1. In the case of installing the video device 30 at the furnace wall 4 to observe the state of molten slag adhering to the lower surface of the furnace lid 5 or the state of the furnace lid 5 being overheated to a high temperature, the video device 30 is installed at an upward angle with respect to the horizontal direction. The installation angle can be adjusted in the range of -90° to 90° with respect to the horizontal direction. For example, the installation angle is appropriately adjusted by controlling the structure of the jig depending on the relative positional relationship between the site to be observed and the hole.

The image captured by the video device 30 is typically connected to a monitor and/or a recording device (both not illustrated) in an operation room operated by an operator via a cable (not illustrated).

The imaging device 36 is capable of capturing the image through the relay lens 31, and the image may be recorded and stored in the imaging device 36. Alternatively, a video cable (not illustrated) may be extended backward so that the image will be captured by another recording device installed in a room with little dust. The form of still images/moving images may be determined according to the user's need, and whether to store images continuously or batchwise may be determined according to the user's need. For example in the case where the observation object is bright, it is desirable to take measures such as photographing through an ND filter.

The inner tube 33 fixes the relay lens 31. The inner tube 33 can be connected to the housing 35. The inner tube 33 may be tubular, and its material may be appropriately selected depending on the relationship between the ambient temperature at which the inner tube 33 is used and the strength of the installation site. Carbon steel, stainless steel, etc. are desirable from the viewpoint of cost.

The outer tube 32 is typically larger in outer diameter than the inner tube 33. It is preferable that the gas 39 can be supplied at the foregoing flow rate between the outer tube 32 and the inner tube 33 toward the end of the relay lens 31 on the melting chamber 2 side. If the distance between the outer tube 32 and the inner tube 33 is excessively wide, the flow rate of the gas supplied increases. It is therefore desirable to appropriately adjust the diameter of the outer tube 32 to secure the flow rate. The outer tube 32 may be tubular, and its material may be appropriately selected depending on the relationship between the ambient temperature at which the outer tube 32 is used and the strength of the installation site. Carbon steel, stainless steel, etc. are desirable from the viewpoint of cost.

The jig 34 for fixing the outer tube 32 to the furnace wall 4 or the furnace lid 5 can be flanged and fixed with bolts in order to connect the outer pipe 32 and the furnace wall 4 or the furnace lid 5. Although the jig 34 and the furnace wall 4 or the furnace lid 5 may be fixed by welding, flange fixing is preferable from the viewpoint of ease of maintenance.

The housing 35 can be used to house and favorably place the imaging device 36. The housing 35 preferably has such a structure that allows the cooling gas 37 to flow in the housing 35, in order to prevent the temperature in the housing 35 from rising and protect the imaging device 36 from heat. The material of the housing 35 may be determined depending on the installation atmosphere, as with the outer tube 32 and the inner tube 33. Carbon steel or stainless steel is desirable from the viewpoint of good connection and high strength.

### EXAMPLES

The presently disclosed techniques will be described in detail below by way of examples. The following examples are merely preferred examples of the present disclosure, and the present disclosure is not limited to the following examples. Modifications can be made to the following examples within the range in which the subject matter of the present disclosure is applicable, with all such modifications being also included in the technical scope of the present disclosure.

In an electric furnace including the melting chamber 2 and the preheating chamber 3 illustrated in FIG. 1, including the video device 30 illustrated in FIG. 2 in the melting chamber 2, and satisfying the conditions shown in Table 1, a cold iron source was melted to produce molten iron. The line specifications of this electric furnace are as follows:
Molten iron capacity of melting chamber: 190 tons.
Electric power: AC 50 Hz.
Transformer capacity: 75 MVA.
Number of electrodes: 3.
Diameter of melting chamber: 5 m.
Highest molten iron interface: 1.3 m from the furnace bottom in the vertically upward direction.

The video device 30 including the inner tube 33 whose outer diameter varied as shown in Table 1 was used. A hole was made in the furnace wall 4 at a position of each of the various heights (separation distance in the vertically upward direction) shown in Table 1 from the highest molten iron interface determined in terms of design from the shape of the electric furnace 1 and the molten iron capacity of 190 tons, and the video device 30 was installed through the jig. The cooling gases 37, 38, and 39 were supplied to the respective inlets of the video device 30 through flexible hoses from gas pipes prepared at a steelworks. An air dryer was installed midway to remove water vapor that could be contained in each cooling gas.

The state of the melting chamber during the actual production of molten iron was checked on a monitor through the video device 30, and whether a clear image field of view was secured and whether the video device was protected from heat were evaluated as follows. The results are shown in Table 1.

### Example 1

The outer diameter of the inner tube in the video device was 80 mm. A hole was made in the furnace wall at a position 500 mm away from the design highest molten iron interface in the vertically upward direction, and the video device was installed. Here, the camera (imaging device) was located 320 mm away from the inner wall of the furnace wall in the furnace outward direction. Air was used as the gas supplied between the inner tube and the outer tube, and its flow rate was 150 NL/min. The temperature at the time was 12 °C.

When producing molten iron, the state of the cold iron source and the molten iron in the melting chamber was able to be visually monitored clearly. When the furnace was tilted, adhesion to the lens due to scattering of molten iron and slag caused when blowing oxygen from the oxygen blowing lance was not observed at all. Thus, adhesion to the lens was completely prevented, and a clear image field of view was secured.

The temperature of the video device was 26 °C on average without exceeding the allowable temperature of 60 °C. Hence, the video device was well protected from the high temperature of the melting chamber.

The cost of the cooling gas supplied between the inner tube and the outer tube was determined based on the total amount of the gases 37 to 39 actually used as compared with 1000 NL/min which is the total flow rate of cooling gas that can be supplied from a compressor during normal operation. In this example, the total amount actually used was 910 NL/min, which was an allowable level without the need to operate a spare compressor and without an increase in cost.

### Example 2

Molten iron was produced under the same conditions as in Example 1, except that the flow rate of the gas supplied between the inner tube and the outer tube was changed to 40 NL/min.

Despite the decrease of the flow rate of the cooling gas, the state of the cold iron source and the molten iron in the melting chamber during the melting process was able to be visually monitored clearly. Although adhesion to the lens due to scattering of molten iron and slag was observed, there was no problem in monitoring the inside of the melting chamber, and a clear image field of view was secured.

The temperature of the video device was 58 °C on average, and temporarily exceeded the allowable temperature of 60 °C, with there being a time when the image was partially disturbed. The operation as a whole, however, had no significant problem, and the video device was able to be protected.

Regarding the cost of the cooling gas supplied between the inner tube and the outer tube, the total amount of the gases 37 to 39 actually used was 800 NL/min, which was an allowable level without an increase in cost.

### Example 3

Molten iron was produced under the same conditions as in Example 1, except that the flow rate of the gas supplied between the inner tube and the outer tube was changed to 260 NL/min.

The state of the cold iron source and the molten iron in the melting chamber during the melting process was able to be visually monitored clearly. Adhesion to the lens due to scattering of molten iron and slag was not observed at all. Thus, adhesion to the lens was completely prevented, and a clear image field of view was secured.

The temperature of the video device was 4 °C on average without exceeding the allowable temperature of 60 °C. Hence, the video device was well protected from the high temperature of the melting chamber.

Regarding the cost of the cooling gas supplied between the inner tube and the outer tube, the total amount of the gases 37 to 39 actually used was 1020 NL/min, and a spare compressor was operated, resulting in an increase in cost. The operation itself, however, had no problem.

### Example 4

Molten iron was produced under the same conditions as in Example 1, except that the separation distance of the relay lens from the highest molten iron interface in the vertically upward direction was changed to 1500 mm.

The state of the cold iron source and the molten iron in the melting chamber during the melting process was able to be visually monitored clearly. Adhesion to the lens due to scattering of molten iron and slag was not observed at all. Thus, adhesion to the lens was completely prevented, and a clear image field of view was secured.

The temperature of the video device was 17 °C on average without exceeding the allowable temperature of 60 °C. Hence, the video device was well protected from the high temperature of the melting chamber.

Regarding the cost of the cooling gas supplied between the inner tube and the outer tube, the total amount of the gases 37 to 39 actually used was 910 NL/min, which was an allowable level without an increase in cost.

### Example 5

Molten iron was produced under the same conditions as in Example 1, except that the outer diameter of the inner tube was changed to 50 mm.

Since the flow rate of the cooling gas supplied between the inner tube and the outer tube was maintained at 150 NL/min, the flow velocity was higher than in Example 1, and the state of the cold iron source and the molten iron in the melting chamber during the melting process was able to be visually monitored more clearly. Adhesion to the lens due to scattering of molten iron and slag was not observed at all. Thus, adhesion to the lens was completely prevented, and a clear image field of view was secured.

The temperature of the video device was 14 °C on average without exceeding the allowable temperature of 60 °C. Hence, the video device was well protected from the high temperature of the melting chamber.

Regarding the cost of the cooling air supplied between the inner tube and the outer tube, the total amount of the gases 37 to 39 actually used was 910 NL/min, which was an allowable level without an increase in cost.

### Example 6

Molten iron was produced under the same conditions as in Example 1, except that the type of gas supplied between the inner tube and the outer tube was changed to nitrogen gas.

The state of the cold iron source and the molten iron in the melting chamber during the melting process was able to be visually monitored clearly. Adhesion to the lens due to scattering of molten iron and slag was not observed at all. Thus, adhesion to the lens was completely prevented, and a clear image field of view was secured.

The temperature of the video device was 29 °C on average without exceeding the allowable temperature of 60 °C. Hence, the video device was well protected from the high temperature of the melting chamber.

Regarding the cost of the cooling air supplied between the inner tube and the outer tube, the total amount of the gases 37 to 39 actually used was 910 NL/min, i.e. 1000 NL/min or less, but the use of nitrogen caused an increase in cost. The operation itself, however, had no problem.

### Comparative Example 1

Molten iron was produced under the same conditions as in Example 1, except that the separation distance of the relay lens from the highest molten iron interface in the vertically upward direction was changed to 290 mm.

When the furnace was tilted, adhesion to the lens due to scattering of molten iron and slag caused when blowing oxygen from the oxygen blowing lance was excessively large, and the field of view gradually narrowed. Over time, it became impossible to observe the inside of the melting chamber at all.

The temperature of the video device was 74 °C on average. In addition to the problem of adhesion of scattered matter, the allowable temperature of 60 °C was exceeded, so that the image was disturbed and the inside of the melting chamber could not be observed.

Regarding the cost of the cooling gas supplied between the inner tube and the outer tube, the total amount of the gases 37 to 39 actually used was 910 NL/min, which was an allowable level without an increase in cost.

### Comparative Example 2

Molten iron was produced under the same conditions as in Example 1, except that the separation distance of the relay lens from the highest molten iron interface in the vertically upward direction was changed to 3600 mm.

Adhesion to the lens due to scattering of molten iron and slag was not observed at all, but the molten iron as the observation object was not within the field of view and the intended image field of view could not be secured.

The temperature of the video device was 14 °C on average without exceeding 60 °C. Hence, the video device was well protected from the high temperature of the melting chamber.

Regarding the cost of the cooling gas supplied between the inner tube and the outer tube, the total amount of the gases 37 to 39 actually used was 910 NL/min, which was an allowable level without an increase in cost.

### Comparative Example 3

Molten iron was produced under the same conditions as in Example 1, except that the outer diameter of the inner tube was changed to 110 mm. When the diameter of the inner tube is larger, the diameter of the outer tube is larger, and the cross-sectional area through which the cooling gas flows is larger. In Comparative Example 3, the flow rate of the cooling gas was maintained at 150 NL/min, so that the flow velocity of the cooling gas was about 1/2 or less of that in Example 1.

Since typically the cooling capacity greatly depends on the flow velocity, the temperature of the inner tube increased and the temperature of the video device increased significantly. The temperature of a thermocouple (not illustrated) installed at the inner tube was 67 °C on average, exceeding the allowable temperature of 60 °C. This caused the relay lens to expand and crack. Consequently, the image field of view could not be secured and the video device could not be protected from high heat.

Regarding the cost of the cooling gas supplied between the inner tube and the outer tube, the total amount of the gases 37 to 39 actually used was 910 NL/min, which was an allowable level without an increase in cost.

### Comparative Example 4

Molten iron was produced under the same conditions as in Example 1, except that the distance of the imaging device from the inner wall of the furnace wall in the furnace outward direction was changed to 290 mm.

In this case, the imaging device was 30 mm closer to the electric furnace side than in Example 1, and the image was disturbed and part of the image was unclear. This is presumed to be because the imaging device was heated more than expected by, for example, the radiant heat from the molten steel as the observation object, and the cooling of the inner tube was insufficient.

The temperature of the video device rose to 77 °C on average, exceeding the allowable temperature of 60 °C. Thus, the video device could not be protected from high heat.

Regarding the cost of the cooling gas supplied between the inner tube and the outer tube, the total amount of the gases 37 to 39 actually used was 910 NL/min, which was an allowable level without an increase in cost.

### [Table 1]

**Table 1**

| | Video-device-equipped electric furnace | | | | | Evaluation items | | | Overall evaluation |
|---|---|---|---|---|---|---|---|---|---|
| | Outer diameter of inner tube (mm) | Separation distance of relay lens from highest molten iron interface in vertically upward direction (mm) | Separation distance of imaging device from inner wall of furnace wall in furnace outward direction (mm) | Type of gas supplied between inner tube and outer tube | Flow rate of gas supplied between inner tube and outer tube (NL/min) | Securing of image field of view | Thermal protection of video device | Cooling gas cost | |
| Example 1 | 80 | 500 | 320 | Air | 150 | ○ | ○ | ○ | ○ |
| Example 2 | 80 | 500 | 320 | Air | 40 | ○ | △ | ○ | ○ |
| Example 3 | 80 | 500 | 320 | Air | 260 | ○ | ○ | × | ○ |
| Example 4 | 80 | 1500 | 320 | Air | 150 | ○ | ○ | ○ | ○ |
| Example 5 | 50 | 500 | 320 | Air | 150 | ○ | ○ | ○ | ○ |
| Example 6 | 80 | 500 | 320 | Nitrogen | 150 | ○ | ○ | × | ○ |
| Comparative Example 1 | 80 | 290 | 320 | Air | 150 | × | × | ○ | × |
| Comparative Example 2 | 80 | 3600 | 320 | Air | 150 | × | ○ | ○ | × |
| Comparative Example 3 | 110 | 500 | 320 | Air | 150 | × | × | ○ | × |
| Comparative Example 4 | 80 | 500 | 290 | Air | 150 | △ | × | ○ | × |

As is clear from Table 1, as a result of the video device having the predetermined structure being installed at the predetermined position in the electric furnace including the melting chamber and the preheating chamber, the behavior inside the melting chamber during operation was able to be monitored directly and clearly. This is useful for preventing operational troubles. Operational troubles not only require the electric furnace to be stopped for a long period of time to halt the production, but also require repair costs. Observing the inside of the melting chamber to prevent operational troubles is therefore very effective.

### INDUSTRIAL APPLICABILITY

It is thus possible to, in an electric furnace that produces molten iron from a cold iron source using arc heat in a melting chamber, directly and clearly observe the state inside the melting chamber during melting.

### REFERENCE SIGNS LIST

- 1: (video-device-equipped) electric furnace
- 2: melting chamber
- 3: preheating chamber
- 4: furnace wall
- 5: furnace lid
- 6: electrode
- 7: oxygen blowing lance
- 8: carbon material blowing lance
- 9: burner
- 12: tapping hole
- 13: slag hole
- 14: supply bucket
- 15: cold iron source
- 16: molten iron
- 17: molten slag
- 18: arc
- 19: cold iron source supply port
- 20: duct
- 21: tapping door
- 22: slag discharge door
- 23: traveling carriage
- 30: video device
- 31: relay lens
- 32: outer tube
- 33: inner tube
- 34: jig
- 35: housing
- 36: imaging device (camera)
- 37: gas (housing cooling air)
- 38: gas (outer tube cooling air)
- 39: gas (relay lens cooling air)
- O: central axis of relay lens
- P: intersection
- R: line segment connecting opening edges at maximum diameter
- L: separation distance

## Claims

1. A video-device-equipped electric furnace comprising:
a melting chamber configured to melt a cold iron source by arc heat to obtain molten iron;
a preheating chamber configured to preheat the cold iron source to be supplied to the melting chamber; and
a video device configured to observe an inside of the melting chamber,
wherein the video device includes: a relay lens made up of a plurality of lenses; an inner tube containing the relay lens and having an outer diameter of 100 mm or less; an outer tube containing the inner tube; and an imaging device located at an axial end of the relay lens on a furnace outside, and
the video device is provided through a hole in a furnace wall or a furnace lid defining the melting chamber so that the relay lens is located 300 mm or more and 3500 mm or less away from a highest molten iron interface in a vertically upward direction and the imaging device is located 300 mm or more away from an inner wall of the furnace wall or the furnace lid in a furnace outward direction.

2. The video-device-equipped electric furnace according to claim 1, comprising
a gas supply device configured to supply a gas between the inner tube and the outer tube at a flow rate of 50 NL/min or more and 250 NL/min or less.
